# EUROPEAN PATENT SPECIFICATION

(11) **EP 3 532 746 B1**
(45) Date of publication and mention of the grant of the patent: **26.07.2023**
(21) Application number: 17788256.0
(22) Date of filing: 26.10.2017
(51) Int. Cl.: F16F 15/02, F16F 15/04, F16F 15/08, H04R 1/02

(54) **PLATFORM TO REDUCE VIBRATIONS**
PLATTFORM ZUR REDUZIERUNG VON SCHWINGUNGEN
PLATEFORME DE RÉDUCTION DE VIBRATIONS

(30) Priority: 26.10.2016 EP 16195689
(43) Date of publication of application: 04.09.2019
(73) Proprietor: Showcom.eu IVS, 1920 Frederiksberg C (DK)
(72) Inventor: HANSEN, Søren, 1920 Frederiksberg C (DK)
(74) Representative: Høiberg P/S
(86) International application number: PCT/EP2017/077532
(87) International publication number: WO 2018/078061

(56) References cited:
- FR-A1- 2 850 721
- GB-A- 1 473 314
- JP-A- S63 199 938
- US-A- 3 917 201
- US-A1- 2002 021 502
- US-B1- 6 567 265
- US-B1- 7 290 759

## Description

### Field of invention

The present invention relates to a platform, in particular to reduce vibrations from a floor. Furthermore, the present invention relates to the field of vibration reduction.

### Background of invention

Platforms to isolate from vibrations are known from the music or audio industry. A typical audio platform is used to isolate vibrations. Vibrations affect the reproduction of sound through hi-fi systems. Although many of these are small and may go largely unnoticed, vibrations have a negative impact on the quality of sound in virtually all hi-fi components, such as turntables and amplifiers.

For example, turntables are highly sensitive to vibrations, thereby raising the noise floor, hence degrading the sound. Amplifiers have microphonic components, including capacitors and connecting wires which move relative to one and another, generating rogue voltages, hence also degrading the sound. Furthermore, computers, streamers and DACs, typically used together with turntables and amplifiers, are highly susceptible to mechanical noise as they all contain vibration sensitive crystal oscillators.

All these hi-fi components are well-known by Disc Jockeys or DJ's. It is therefore no secret to DJ's that the best sound is provided when hi-fi systems are vibration isolated from the floor and/or the sound, for example from the speakers.

Vibration isolation can be provided in many ways and by different materials. The overall desire is to provide a stable, rigid and non-resonant support. For example, US96656204A discloses a vibration isolation platform utilizing a plurality of viscoelastic polymer blocks sandwiched between rigid plinths or boards and stacked on top of one another to provide vibration damping. The platform is pre-loaded to optimum isolation and locked down at the required compression. The document US 7 290 759 B1 discloses a platform with a table plate for supporting a equipment and with viscoelastic members for vibration isolation. The document US 7 290 759 B1 discloses the preamble of the claim 1.

Another solution to provide a stable, rigid and non-resonant support is by providing heavy blocks of concrete, marble or granite to support the hi-fi systems. While no doubt very effective, this radical and expensive method is likely to be impractical for most people and DJ's.

### Summary of invention

The present disclosure relates to a device that provides vibration isolation, in particular originating from the floor and at the same time provides for a practical and mobile solution.

The present disclosure provides a platform configured for reducing vibrations, comprising: a table plate configured with a top surface to hold audio equipment; a first base frame; a second base frame; at least one first vibration reducing element connecting the table plate to the first base frame; and at least one second vibration reducing element, more preferably at least two second vibration reducing elements, connecting the first base frame to the second base frame. In a preferred embodiment the configuration of the first vibration reducing element is different from the configuration of the second vibration reducing element. In one embodiment the first base frame comprises at least two opposing first side elements. Further, the second base frame may comprise at least two opposing second side elements. In a preferred embodiment each of said second vibration reducing elements is connected in-between each of said opposing first side elements and each of said opposing second side elements.

In the audio industry it is known to use a table plate within a base frame, for example using spikes or the like. However, a frame within a frame is not of custom practice in the field. Nevertheless, the inventors of the present invention have found out that by using the presently disclosed solution of a frame within a frame interconnected by vibration reducing elements, vibrations, in particular from a floor, are greatly reduced in comparison to using a table plate and a single frame, because the table plate is connected to the frame that rests on the ground via two, preferably different, vibration reducing configurations.

An advantage of the present invention is related to the two opposing first side elements and the two opposing second side elements, and the second vibration reducing elements in-between the side elements, in that this construction provides for mechanical vibrations that come from the side. Typically, a single frame is used due to mechanical vibrations from the floor or the ground and upwards, not sideways.

Thus, the present invention is well-suited for situations where the floor is able to move from side to side, as for example is the case on a performing stage, where the performing stage is set on the ground and people are able to push from the ground an into the performing stage. In other words, the present invention is well-suited for DJ's performing on stages which desire to provide optimal sound to the audience on the floor, and where the stage is able to move horizontally.

Accordingly, in one aspect on the invention, there is provided an audio platform with the features according to the presently disclosed platform.

Thus, the use of the platform during a concert is hereby also disclosed. When using the platform during a concert, the inventors have found that the music and/or sound reproduction is improved, and provides an optimal experience for the people during that concert.

However, although well-suited for the above described situation, the inventors have also found, that the platform according to the present invention is able to be used in the medico industry, where vibration isolation is of great importance in laboratories, for example during analysis of biological objects and/or chemical samples.

Accordingly, in another aspect of the invention, there is provided a laboratory platform with the features according to the presently disclosed platform.

### Description of drawings

**Fig. 1** shows a platform according to the present invention.
**Fig. 2** shows vibration reducing elements according to the present invention.

### Detailed description of the invention

The present invention is defined in the claims. In the following, features of the present invention are described in further details.

### First and second base frame

In one embodiment of the present invention, the first base frame is an inner base frame wherein said first side elements are inner side elements. In this sense, the first base frame may be inside the second base frame. In an alternative embodiment of the present invention, the first base frame may be outside the second base frame.

In a second embodiment of the present invention, the first base frame comprises at least one first bottom element connecting said two opposing first side elements, wherein said first bottom element is configured to stabilize said two opposing first side elements.

In one embodiment of the present invention, the second base frame is an outer base frame wherein said second side elements are outer side elements. In this sense, the second base frame may be outside the first base frame. In an alternative embodiment of the present invention, the second base frame may be inside the first base frame.

In another embodiment of the present invention, the second base frame comprises at least one second bottom element connecting said two opposing second side elements, wherein said second bottom element is configured to stabilize said two opposing second side elements.

In a preferred embodiment of the present invention, the first base frame and/or the second base frame is/are made of steel. Alternatively, said base frame(s) may be made of wood and/or aluminium.

In most preferred embodiments of the present invention, the first base frame and/or the second base frame define(s) a length between the two opposing first and/or second side elements of more than 1 m, such as 1.25 m, such as 1.5 m, such as 1.75 m, and/or such as up to 2 m. Further, the first base frame and/or second base frame may define a width of each of the opposing first and/or second side elements of more than 0.25 m, such as 0.5 m, or such as 1 m. Even further, the first base frame and/or second base frame may define a height of each of the opposing first and/or second side elements of more than 0.25 m, such as 0.5 m, or such as 1 m. The thickness of each of the opposing first and/or second side elements and/or the first and/or second bottom element may be between 1 and 10 cm, such as between 3 and 7 cm, such as between 4 and 6 cm, such as around 5 cm. By the herein disclosed dimensions, there is provided a solid construction of a platform to effectively reduce vibrations.

In a preferred embodiment of the present invention, the second bottom element comprises wheels such that the audio platform can be moved. This provides for a mobile platform that is for example easy to move in an out on a stage, such as a music performance stage.

### Table plate

In one embodiment of the present invention, the table plate comprises a third vibration reducing element attached to the top surface. The third vibration reducing element may for example be a rubber surface. The third vibration reducing element may provide for optimal vibration isolation.

Most preferably, the table plate has a height of between 1 cm and 5 cm, such as around 3 cm.

In another embodiment of the present invention, the top surface has a surface area greater than 0.5 square meter. In other embodiments, the top surface has a surface area greater than 1 square meter. Thereby is provided an area that is able to provide a single area for various equipment units -for example various audio equipment or medical test equipment.

In a preferred embodiment of the present invention, the table plate comprises a mass greater than 20 kg, such as greater than 40 kg, such as greater than 60 kg, such as greater than 80 kg, such as greater than 100 kg, or such as greater than 200 kg. Thereby is provided a mass that is not easily transferring vibrations, whereby further efficient damping or isolation of vibrations is provided.

In additional and/or alternative embodiments of the present invention, the table plate comprises at least one slot configured to hold one or more concrete blocks, each concrete block having a mass between 80 and 100 kg, and/or each concrete block having an area identical to or more than 0.5 square meter and a height between 5 cm and 15 cm, such as between 6 cm and 10 cm, such as 7 cm, 8, cm, and 9 cm. This embodiment provides for a flexible platform that can be adapted with various masses depending on the desired level of vibration isolation, while at the same time a mobile platform that is easy to move around, when the table plate does not hold one or more concrete blocks.

### Vibrations reducing elements

In one embodiment of the present invention, the first vibration reducing element is a suspension element configured to suspend the table plate from the at least two opposing first side elements. Thereby is provided a floating table plate, i.e. a plate that is able to move freely in the air. A floating table plate provides that vibrations that originate from the floor and into the first base frame are not easily transferred to the table plate.

In a preferred embodiment of the invention, the suspension element is a band made of one or more of the materials selected from the group of elastomers, plastic and rubber.

In an alternative embodiment of the invention, the first vibration reducing element is a spike configured with a sharp tip that rests on the first base frame and configured with a non-sharp base attached to the table plate.

In one embodiment of the present invention, the second vibration reducing element is made of at least one elastic material.

In an additional and/or alternative embodiment of the present invention, the second vibration reducing element is made of two elastic materials, the first elastic material having a first elastic property and the second elastic material having a second elastic property that differs from the first elastic property. The inventors of the present invention have found that this construction provides for optimal isolation of vibrations, in particular vibrations due to sideways movements.

In particular embodiments of the above embodiment, the two elastic materials are displaced laterally from each other, such that the elastic materials are placed in two layers in-between each of said opposing first side elements and each of said opposing second side elements.

As previously described, the third vibration reducing element may be a layer made of rubber.

The different vibration reducing elements may have different elasticity and/or hardness.

There are different Shore Hardness scales for measuring the hardness of different materials. These scales are used so people can discuss these materials and have a common point of reference. The Shore A00 Scale measures rubbers and gels that are very soft.

The Shore A Hardness Scale measures the hardness of flexible mold rubbers that range in hardness from very soft and flexible, to medium and somewhat flexible, to hard with almost no flexibility at all. Semi-rigid plastics can also be measured on the high end of the Shore A Scale.

In one embodiment, each of the first vibration reducing elements has a hardness of between Shore40A and Shore 60A. The inventors have shown that such hardness effectively reduces vibrations of material and/or devices placed on the table plate, wherein the material and/or devices in total have a mass of between 60 kg and 80 kg. Such a mass is typical for DJ devices and/or equipment, such as amplifiers and sound reproduction devices. Further, specifically, by the here disclosed hardness, and construction of the platform, the inventors have found that the material and/or devices does not experience a load of more than 3 g.

In a second embodiment, one of the two elastic materials has a hardness of between Shore 40A and Shore 60A, preferably around Shore 57A. The inventors have shown that for this embodiment, the same advantages are present as just described above.

In third embodiment, the at least two second vibration reducing elements are at least three second vibration reducing elements on each side between first side elements and the second side elements, and placed such that the at least two of the at least three second vibration reducing elements differ in vertical position. The inventors have shown that for this embodiment, the same advantages are present as just described above.

In embodiments where the second vibration reducing elements differ in vertical position, the second vibration reducing elements also differ in hardness by more than Shore 5A, preferably more than Shore 10A, most preferably more than Shore 15A. The inventors have shown that for this embodiment, the same advantages are present as just described above.

In some embodiments, the third vibration reducing element has a hardness of between Shore 10A and Shore 30A, preferably between Shore 15A and Shore 20A. The inventors have shown that for this embodiment, the same advantages are present as just described above.

By the various hardness values as described above, the values may be determined and selected within a tolerance of +/- Shore 5A.

### Example 1 - A platform

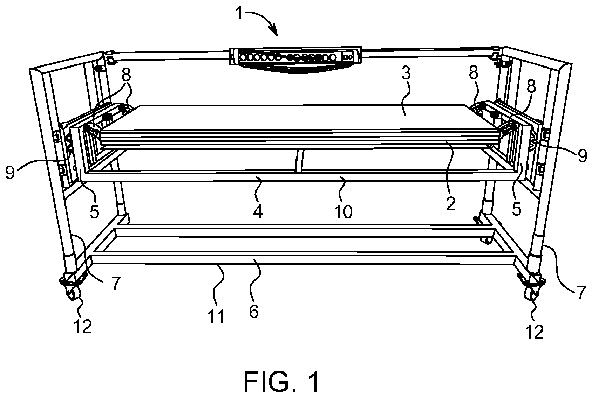

**Fig. 1** shows a platform **1** configured for reducing vibrations, comprising: a table plate **2** configured with a top surface **3.** In this embodiment, the use may be to hold audio equipment. There is shown a first base frame **4** comprising at least two opposing first side elements **5**; a second base frame **6** comprising at least two opposing second side elements **7**; at least one first vibration reducing element **8** connecting the table plate **2** to the first base frame **4**; at least two second vibration reducing elements **9** connecting the first base frame **4** to the second base frame **6**, wherein each of said second vibration reducing elements **9** is connected in-between each of said opposing first side elements **5** and each of said opposing second side elements **7**. The first base frame **4** comprises one first bottom element **10** connecting said two opposing first side elements **5**, wherein said first bottom element **10** is configured to stabilize said two opposing first side elements **5**. The second base frame **6** comprises at least one second bottom element **11** connecting said two opposing second side elements **7**, wherein said second bottom element **11** is configured to stabilize said two opposing second side elements **7**. The second bottom element comprises wheels **12** such that the platform **1** can be easily moved. The platform as shown is as an example to be used as an audio platform on a stage.

### Example 2 - Vibrations reducing elements

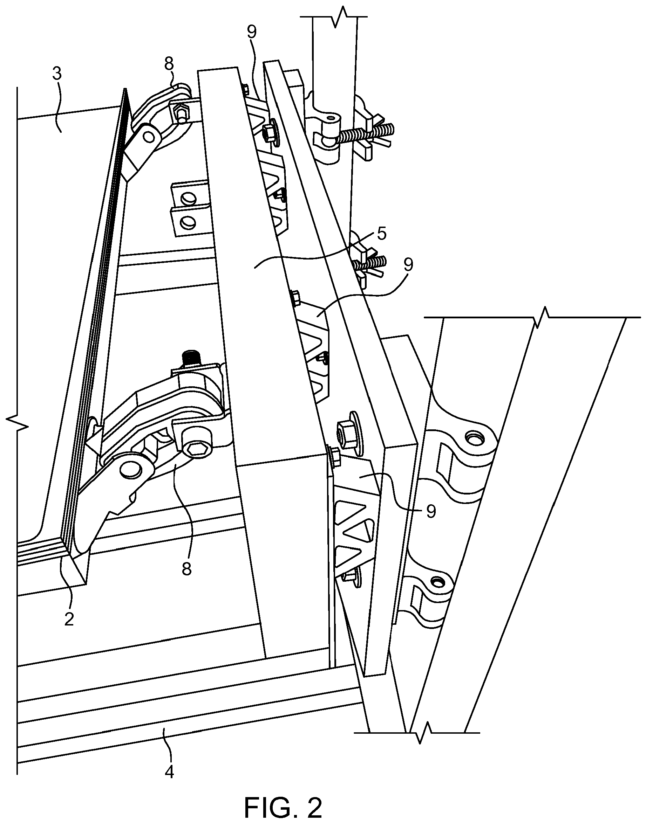

**Fig. 2** shows a part of the platform shown in **Fig. 1****.** **Fig. 2** shows one first vibration reducing element **8** connecting the table plate **2** to the first base frame **4**. In this example, the first vibration reducing element **8** is a suspension element configured to suspend the table plate **2** from the at least two opposing first side elements **7**, here showing one of the at least two opposing first side elements **7**. Further, in this example, the second vibration reducing element **9** is made of at least one elastic material. As shown in this example, the second vibration reducing element is further made of two elastic materials. The second elastic material is a plate made of wood. Thus, the first elastic material made of rubber has a first elastic property and the second elastic material made of wood has a second elastic property that differs from the first elastic property. As can also be seen from **Fig. 2****,** the first elastic material is structured with holes such that the material is able to be compressed and absorb vibrations, especially vibrations coming from the side, i.e. from either the side element from the first base frame **4** or from the second side element from the second base frame **6**.

Further details of the invention are provided in the items as described below.

### Items

1. A platform configured for reducing vibrations, comprising:
   - a table plate configured with a top surface to hold equipment;
   - a first base frame;
   - a second base frame;
   - at least one first vibration reducing element connecting the table plate to the first base frame; and
   - at least two second vibration reducing elements connecting the first base frame to the second base frame.
2. The platform according to item 1, wherein the first base frame is an inner base frame.
3. The platform according to any of the preceding items, wherein the second base frame is an outer base frame.
4. The platform according to any of the preceding items, wherein the table plate comprises a third vibration reducing element attached to the top surface.
5. The platform according to item 4, wherein the third vibration reducing element is a layer made of rubber.
6. The platform according to any of the preceding items, wherein the top surface has a surface area greater than 0.5 square meter.
7. The platform according to any of the preceding items, wherein the top surface has a surface area greater than 1 square meter.
8. The platform according to any of the preceding items, wherein the table plate comprises a mass greater than 20 kg, such as greater than 40 kg, such as greater than 60 kg, such as greater than 80 kg, such as greater than 100 kg, or such as greater than 200 kg.
9. The platform according to any of the preceding items, wherein the table plate comprises at least one slot configured to hold one or more concrete blocks, each concrete block having a mass between 80 and 100 kg, and/or each concrete block having an area identical to or more than 0.5 square meter and a height between 5 cm and 15 cm, such as between 6 cm and 10 cm, such as 7 cm, 8, cm, and 9 cm.
10. The platform according to any of the preceding items, wherein the first base frame comprises at least one first bottom element connecting two opposing first side elements, wherein said first bottom element is configured to stabilize the two opposing first side elements.
11. The platform according to any of the preceding items, wherein the first base frame is made of steel.
12. The platform according to any of the preceding items, wherein the second base frame comprises at least one second bottom element connecting two opposing second side elements, wherein said second bottom element is configured to stabilize the two opposing second side elements.
13. The platform according to item 12, wherein said second bottom element comprises wheels such that the platform can be moved.
14. The platform according to any of the preceding items, wherein the first vibration reducing element is a suspension element configured to suspend the table plate from the first base frame.
15. The platform according to item 14, wherein the suspension element is a band made of one or more of the materials selected between plastic and rubber.
16. The platform according to any of the preceding items, wherein the first vibration reducing element is a spike configured with a sharp tip that rests on the first base frame and configured with a non-sharp base attached to the table plate.
17. The platform according to any of the preceding items, wherein said second vibration reducing element is made of at least one elastic material.
18. The platform according to any of the preceding items, wherein said second vibration reducing element is made of two elastic materials, the first elastic material having a first elastic property and the second elastic material having a second elastic property that differs from the first elastic property.
19. The platform according to item 18, wherein the two elastic materials are displaced laterally from each other, such that the first elastic material is above the second elastic material.
20. Use of the platform according to any of the items 1-19 during a concert.
21. Use of the platform according to any of the items 1-19 in a laboratory, such as in a medical laboratory.

## Claims

1. A platform (1) configured for reducing vibrations, comprising:
- a table plate (2) configured with a top surface (3) to hold equipment;
- an inner base frame (4) comprising at least two opposing first side elements (5);
- an outer base frame (6) comprising at least two opposing second side elements (7);
- at least two first vibration reducing elements (8) connecting the table plate (2) to the inner base frame (4); and
- at least two second vibration reducing elements (9) connecting the inner base frame (4) to the outer base frame (6),
wherein each of said second vibration reducing elements (9) is connected in-between each of said opposing first side elements (5) and each of said opposing second side elements (7), and
wherein each of said second vibration reducing elements (9) is made of two elastic materials:
- the first elastic material having a first elastic property, and **characterized in that**
- the second elastic material having a second elastic property that differs from the first elastic property,
wherein the two elastic materials are displaced laterally from each other, such that the two elastic materials are placed in two layers in-between each of said opposing first side elements (5) and each of said opposing second side elements (7), and
wherein each of the first vibration reducing elements (8) is a suspension element configured to suspend the table plate (2) from the inner base frame (4).

2. The platform (1) according to any of the preceding claims, wherein the table plate (2) comprises a third vibration reducing element attached to the top surface (3), the third vibration reducing element preferably having a hardness of between Shore 10A and Shore 30A, preferably between Shore 15A and Shore 20A.

3. The platform (1) according to any of the preceding claims, wherein the table plate (2) comprises a mass greater than 20 kg, such as greater than 40 kg, such as greater than 60 kg, such as greater than 80 kg, such as greater than 100 kg, or such as greater than 200 kg.

4. The platform (1) according to any of the preceding claims, wherein the table plate (2) comprises at least one slot configured to hold one or more blocks, such as concrete blocks, each block having a mass between 80 and 100 kg, and/or each block having an area identical to or more than 0.5 square meter and a height between 5 cm and 15 cm, such as between 6 cm and 10 cm, such as 7 cm, 8, cm, and 9 cm.

5. The platform (1) according to any of the preceding claims, wherein the first base frame comprises at least one first bottom element (10) connecting two opposing first side elements (5), wherein said first bottom element (10) is configured to stabilize the two opposing first side elements (5).

6. The platform (1) according to any of the preceding claims, wherein the first base frame is made of steel.

7. The platform (1) according to any of the preceding claims, wherein the second base frame comprises at least one second bottom element (11) connecting two opposing second side elements (7), wherein said second bottom element (11) is configured to stabilize the two opposing second side elements (7).

8. The platform (1) according to claim 7, wherein said second bottom element (11) comprises wheels (12) such that the platform (1) can be moved.

9. The platform (1) according to any of the preceding claims, wherein the suspension element is a band made of one or more of the materials selected between plastic and rubber.

10. The platform (1) according to any of the preceding claims, wherein each of the first vibration reducing elements (8) has a hardness of between Shore40A and Shore 60A.

11. The platform (1) according to any of the preceding claims, wherein one of the two elastic materials has a hardness of between Shore 40A and Shore 60A, preferably around Shore 57A.

12. The platform (1) according to any of the preceding claims, wherein the at least two second vibration reducing elements (9) are at least three second vibration reducing elements on each side between first side elements (5) and the second side elements (7), and placed such that the at least two of the at least three second vibration reducing elements differ in vertical position.

13. The platform (1) according to claim 12, wherein the vibration reducing elements that differ in vertical position also differ in hardness by more than Shore 5A, preferably more than Shore 10A, most preferably more than Shore 15A.

14. Use of the platform (1) according to any of the preceding claims during a concert.

## Patentansprüche

1. Plattform (1), die zum Reduzieren von Schwingungen konfiguriert ist, umfassend:
- eine Tischplatte (2), die mit einer oberen Oberfläche (3) zum Halten von Geräten konfiguriert ist;
- einen inneren Grundrahmen (4), der mindestens zwei gegenüberliegende erste Seitenelemente (5) umfasst;
- einen äußeren Grundrahmen (6), der mindestens zwei gegenüberliegende zweite Seitenelemente (7) umfasst;
- mindestens zwei erste schwingungsreduzierende Elemente (8), die die Tischplatte (2) mit dem inneren Grundrahmen (4) verbinden; und
- mindestens zwei zweite schwingungsreduzierende Elemente (9), die den inneren Grundrahmen (4) mit dem äußeren Grundrahmen (6) verbinden,
wobei jedes der zweiten schwingungsreduzierenden Elemente (9) zwischen jedem der gegenüberliegenden ersten Seitenelemente (5) und jedem der gegenüberliegenden zweiten Seitenelemente (7) verbunden ist, und wobei jedes der zweiten schwingungsreduzierenden Elemente (9) aus zwei elastischen Materialien besteht:
wobei das erste elastische Material eine erste elastische Eigenschaft aufweist, und **dadurch gekennzeichnet, dass** das zweite elastische Material eine zweite elastische Eigenschaft aufweist, die sich von der ersten elastischen Eigenschaft unterscheidet,
wobei die zwei elastischen Materialien seitlich gegeneinander verschoben sind, sodass die zwei elastischen Materialien in zwei Schichten zwischen jedem der gegenüberliegenden ersten Seitenelemente (5) und jedem der gegenüberliegenden zweiten Seitenelemente (7) angeordnet sind, und wobei jedes der ersten schwingungsreduzierenden Elemente (8) ein Aufhängungselement ist, das dazu konfiguriert ist, die Tischplatte (2) am inneren Grundrahmen (4) aufzuhängen.

2. Plattform (1) nach einem der vorhergehenden Ansprüche, wobei die Tischplatte (2) ein drittes schwingungsreduzierendes Element umfasst, das an der oberen Oberfläche (3) angebracht ist, wobei das dritte schwingungsreduzierende Element vorzugsweise eine Härte zwischen Shore 10A und Shore 30A, vorzugsweise zwischen Shore 15A und Shore 20A aufweist.

3. Plattform (1) nach einem der vorhergehenden Ansprüche, wobei die Tischplatte (2) eine Masse von mehr als 20 kg, wie etwa mehr als 40 kg, wie etwa mehr als 60 kg, wie etwa mehr als 80 kg, wie etwa mehr als 100 kg oder wie etwa mehr als 200 kg umfasst.

4. Die Plattform (1) nach einem der vorhergehenden Ansprüche, wobei die Tischplatte (2) mindestens einen Schlitz umfasst, der zum Halten eines oder mehrerer Blöcke, wie etwa Betonblöcke, konfiguriert ist, wobei jeder Block eine Masse zwischen 80 und 100 kg aufweist und/oder jeder Block eine Fläche von mindestens 0,5 Quadratmetern und eine Höhe zwischen 5 cm und 15 cm, wie etwa zwischen 6 cm und 10 cm, wie etwa 7 cm, 8 cm und 9 cm aufweist.

5. Plattform (1) nach einem der vorhergehenden Ansprüche, wobei der erste Grundrahmen mindestens ein erstes Bodenelement (10) umfasst, das zwei gegenüberliegende erste Seitenelemente (5) verbindet, wobei das erste Bodenelement (10) dazu konfiguriert ist, die zwei gegenüberliegenden ersten Seitenelemente (5) zu stabilisieren.

6. Plattform (1) nach einem der vorhergehenden Ansprüche, wobei der erste Grundrahmen aus Stahl besteht.

7. Plattform (1) nach einem der vorhergehenden Ansprüche, wobei der zweite Grundrahmen mindestens ein zweites Bodenelement (11) umfasst, das zwei gegenüberliegende zweite Seitenelemente (7) verbindet, wobei das zweite Bodenelement (11) dazu konfiguriert ist, die zwei gegenüberliegenden zweiten Seitenelemente (7) zu stabilisieren.

8. Plattform (1) nach Anspruch 7, wobei das zweite Bodenelement (11) Räder (12) umfasst, sodass die Plattform (1) bewegt werden kann.

9. Plattform (1) nach einem der vorhergehenden Ansprüche, wobei das Aufhängungselement ein Band ist, das aus einem oder mehreren der aus Kunststoff und Gummi ausgewählten Materialien besteht.

10. Plattform (1) nach einem der vorhergehenden Ansprüche, wobei jedes der ersten schwingungsreduzierenden Elemente (8) eine Härte zwischen Shore 40A und Shore 60 aufweist.

11. Plattform (1) nach einem der vorhergehenden Ansprüche, wobei eines der zwei elastischen Materialien eine Härte zwischen Shore 40A und Shore 60A, vorzugsweise etwa Shore 57A, aufweist.

12. Plattform (1) nach einem der vorhergehenden Ansprüche, wobei die mindestens zwei zweiten schwingungsreduzierenden Elemente (9) mindestens drei zweite schwingungsreduzierende Elemente auf jeder Seite zwischen ersten Seitenelementen (5) und den zweiten Seitenelementen (7) sind und so angeordnet sind, dass sich die mindestens zwei der mindestens drei zweiten schwingungsreduzierenden Elemente in ihrer vertikalen Position unterscheiden.

13. Plattform (1) nach Anspruch 12, wobei sich die schwingungsreduzierenden Elemente, die sich in der vertikalen Position unterscheiden, auch in der Härte um mehr als Shore 5A, vorzugsweise mehr als Shore 10A, am meisten bevorzugt mehr als Shore 15A unterscheiden.

14. Verwendung der Plattform (1) nach einem der vorhergehenden Ansprüche während eines Konzerts.

## Revendications

1. Plate-forme (1) configurée pour réduire les vibrations, comprenant :
- un plateau de table (2) configuré avec une surface supérieure (3) pour maintenir l'équipement ;
- un châssis de base intérieur (4) comprenant au moins deux premiers éléments latéraux opposés (5) ;
- un châssis de base extérieur (6) comprenant au moins deux seconds éléments latéraux opposés (7) ;
- au moins deux premiers éléments de réduction de vibrations (8) reliant le plateau de table (2) au châssis de base intérieur (4) ; et
- au moins deux deuxièmes éléments de réduction de vibrations (9) reliant le châssis de base intérieur (4) au châssis de base extérieur (6),
dans laquelle chacun desdits deuxièmes éléments de réduction de vibrations (9) est connecté entre chacun desdits premiers éléments latéraux opposés (5) et chacun desdits seconds éléments latéraux opposés (7), et
dans laquelle chacun desdits seconds éléments de réduction de vibrations (9) est composé de deux matériaux élastiques :
- le premier matériau élastique ayant une première propriété élastique, et **caractérisé en ce que**
- le second matériau élastique ayant une deuxième propriété élastique qui diffère de la première propriété élastique,
dans laquelle les deux matériaux élastiques sont déplacés latéralement l'un par rapport à l'autre, de sorte que les deux matériaux élastiques sont placés en deux couches entre chacun desdits premiers éléments latéraux opposés (5) et chacun desdits seconds éléments latéraux opposés (7), et
dans laquelle chacun des premiers éléments de réduction de vibrations (8) est un élément de suspension configuré pour suspendre le plateau de table (2) au cadre de base intérieur (4) .

2. Plate-forme (1) selon l'une quelconque des revendications précédentes, dans laquelle le plateau de table (2) comprend un troisième élément de réduction de vibrations fixé à la surface supérieure (3), le troisième élément de réduction de vibrations ayant de préférence une dureté comprise entre Shore 10A et Shore 30A, de préférence entre Shore 15A et Shore 20A.

3. Plate-forme (1) selon l'une quelconque des revendications précédentes, dans laquelle le plateau de table (2) comprend une masse supérieure à 20 kg, telle que supérieure à 40 kg, telle que supérieur à 60 kg, telle que supérieur à 80 kg, telle que supérieur à 100 kg, ou telle que supérieur à 200 kg.

4. Plate-forme (1) selon l'une quelconque des revendications précédentes, dans laquelle le plateau de table (2) comprend au moins une fente configurée pour contenir un ou plusieurs blocs, tels que des blocs de béton, chaque bloc ayant une masse comprise entre 80 et 100 kg, et /ou chaque bloc ayant une surface identique ou supérieure à 0,5 mètre carré et une hauteur comprise entre 5 cm et 15 cm, telle qu'entre 6 cm et 10 cm, telle que 7 cm, 8 cm et 9 cm.

5. Plate-forme (1) selon l'une quelconque des revendications précédentes, dans laquelle le premier châssis de base comprend au moins un premier élément inférieur (10) reliant deux premiers éléments latéraux opposés (5), dans laquelle ledit premier élément inférieur (10) est configuré pour stabiliser les deux premiers éléments latéraux opposés (5) .

6. Plate-forme (1) selon l'une quelconque des revendications précédentes, dans laquelle le premier châssis de base est en acier.

7. Plate-forme (1) selon l'une quelconque des revendications précédentes, dans laquelle le second châssis de base comprend au moins un second élément inférieur (11) reliant deux seconds éléments latéraux opposés (7), dans laquelle ledit second élément inférieur (11) est configuré pour stabiliser les deux seconds éléments latéraux opposés (7) .

8. Plate-forme (1) selon la revendication 7, dans laquelle ledit second élément inférieur (11) comprend des roues (12) de sorte que la plate-forme (1) peut être déplacée.

9. Plate-forme (1) selon l'une quelconque des revendications précédentes, dans laquelle l'élément de suspension est une bande constituée d'un ou plusieurs des matériaux choisis entre le plastique et le caoutchouc.

10. Plate-forme (1) selon l'une quelconque des revendications précédentes, dans laquelle chacun des premiers éléments de réduction de vibrations (8) a une dureté comprise entre Shore 40A et Shore 60A.

11. Plate-forme (1) selon l'une quelconque des revendications précédentes, dans laquelle l'un des deux matériaux élastiques a une dureté comprise entre Shore 40A et Shore 60A, de préférence autour de Shore 57A.

12. Plate-forme (1) selon l'une quelconque des revendications précédentes, dans laquelle les au moins deux deuxièmes éléments de réduction de vibrations (9) sont au moins trois deuxièmes éléments de réduction de vibrations de chaque côté entre les premiers éléments latéraux (5) et les seconds éléments latéraux (7) et placé de sorte que les au moins deux des au moins trois deuxièmes éléments de réduction de vibrations diffèrent en position verticale.

13. Plate-forme (1) selon la revendication 12, dans laquelle les éléments de réduction de vibrations, qui diffèrent en position verticale, diffèrent également en dureté de plus de Shore 5A, de préférence de plus de Shore 10A, de préférence de plus de Shore 15A.

14. Utilisation de la plateforme (1) selon l'une quelconque des revendications précédentes lors d'un concert.
